## Europäisches Patentamt

## European Patent Office

## Office européen des brevets

(11) Veröffentlichungsnummer: **0 316 751**
**A1**

# EUROPÄISCHE PATENTANMELDUNG

(21) Anmeldenummer: 88118695.1

(22) Anmeldetag: **10.11.88**

(51) Int. Cl.⁴: **F16J 15/32 , F16J 15/56 , F16J 15/16**

(30) Priorität: **17.11.87 DE 3738988**

(43) Veröffentlichungstag der Anmeldung:
**24.05.89 Patentblatt 89/21**

(84) Benannte Vertragsstaaten:
**AT BE CH DE ES FR GB GR IT LI LU NL SE**

(71) Anmelder: **Busak + Luyken GmbH & Co.**
**Handwerkstrasse 5-7**
**D-7000 Stuttgart 80(DE)**

(72) Erfinder: **Müller, Heinz, K., Prof.**
**Aprikosenweg 2**
**D-7050 Waiblingen(DE)**

(74) Vertreter: **Patentanwälte Kohler - Schwindling**
**- Späth**
**Hohentwielstrasse 41**
**D-7000 Stuttgart 1(DE)**

(54) **Dichtungsanordnung.**

(57) Eine Dichtungsanordnung umfaßt einen Dichtring (3), der mit nahe seinen Enden angeordneten Dichtkanten (7, 10) an einem zweiten Maschenteil (6) anliegt, und einen den Dichtring umgebenden und radial belastenden Spannring (4), der in eine ringförmige Aussparung des Dichtringes eingelegt ist. Es soll die Dichtigkeit einer solchen Anordnung bei hohen Drücken des Mediums verbessert werden.

Die Verbesserung wird dadurch erzielt, daß der Spannring (4) in einer trapezförmigen Ringnut des Dichtringes (3) liegt, die mit dem Raum (21) zwischen den Dichtkanten (7,10) durch Radialbohrungen (17) verbunden ist. Der in der Nut des Dichtringes fixierte Spannring erfährt im Betrieb druckabhängige Verlagerungen, die zu einer Entlastung der hochdruckseitigen Dichtkante (7) bei gleichzeitiger Erhöhung des Anpreßdruckes an der niederdruckseitigen Dichtkante (10) führen. Dadurch kann das Druckmedium aus dem Raum (21) zwischen den beiden Dichtkanten an der entlasteten hochdruckseitigen Dichtkante (7) und/oder über die Radialbohrungen (17) abfließen und es wird eine Leckage durch Abheben des Dichtringes selbst bei sehr hohen Drücken vermieden.

## Dichtungsanordnung

Die Erfindung betrifft eine Anordnung zum Abdichten des Spaltes zwischen zwei zueinander konzentrischen, geradlinig gegeneinander beweglichen Maschinenteilen, von denen das erste eine Nut und das zweite eine der Nut gegenüberliegende glatte Anlagefläche aufweist, mit einem in die Nut des ersten Maschinenteiles eingelegten Dichtring aus zähelastischem Kunststoff, der an seiner der Anlagefläche zugewandten ersten Umfangsfläche nahe seinen Enden angeordnete Dichtkanten aufweist, mit denen er an der Anlagefläche des zweiten Maschinenteiles anliegt, und der an seiner dem Nutengrund zugewandten zweiten Umfangsfläche eine ringförmige Aussparung aufweist, und mit einem zwischen Dichtring und Nutengrund angeordneten, den Dichtring radial belastenden Spannring aus gummielastischem Material, dessen axiale Ausdehnung geringer ist als diejenige des Dichtringes und der in die Aussparung an der zweiten Umfangsfläche des Dichtringes eingesetzt ist.

Eine solche Dichtungsanordnung ist in Form einer Doppelabstreifer-Anordnung aus der DE-OS 36 03 669 bekannt. Bei dieser bekannten Anordnung befindet sich die Aussparung zur Aufnahme des Spannringes am niederdruckseitigen Ende des Dichtringes und bildet eine Art Stufe, die zur niederdruckseitigen Stirnfläche des Dichtringes hin offen ist. Demgemäß ist der Spannring nicht nur zwischen dem Nutengrund und der dem Nutengrund zugewandten zweiten Umfangsfläche des Dichtringes eingespannt, sondern auch zwischen der niederdruckseitigen Flanke der Nut und der dieser Flanke mit Abstand gegenüberstehenden Flanke der Aussparung. Dadurch wird der Dichtring unter normalen Betriebsbedingungen an der dem Spannring abgewandten, hochdruckseitigen Flanke der Nut in Anlage gehalten. Die Anordnung ist weiterhin so getroffen, daß das Anpreßmaximum des Spannringes auf der niederdruckseitigen Dichtkante liegt.

Es hat sich gezeigt, daß bei einer solchen Doppelabstreifer-Anordnung, die gleichzeitig die Funktion einer Dichtung hat, ein zunehmender Druck des Abzudichtenden Mediums zu einer zunehmenden Leckage führt, so daß die bekannte Anordnung jedenfalls dann nicht als einziges Abdichtungs- und Abstreiferelement geeignet ist, wenn das abzudichtende Medium unter einem sehr hohen Druck steht. Dann ist das Vorschalten weiterer Dichtungselemente erforderlich.

Der Erfindung liegt die Aufgabe zugrunde, eine Anordnung der eingangs genannten Art so zu verbessern, daß sie auch bei sehr hohen Mediendrük-ken eine einwandfreie Abdichtung gewährleistet.

Diese Aufgabe wird nach der Erfindung dadurch gelöst, daß sich die Aussparung im Bereich zwischen den beiden Dichtkanten des Dichtringes befindet und eine mit zunehmender Tiefe abnehmende Breite aufweist und daß der in die Aussparung eingreifende Spannring frei ist, sich in Richtung auf die Niederdruckseite der Anordnung zu verlagern.

Sehr sorgfältige Messungen haben gezeigt, daß die bei hohem Druck zunehmende Leckage der bekannten Anordnung darauf zurückzuführen ist, daß sich in dem in den Raum zwischen den beiden Dichtkanten eingeschleppten Medium ein sehr hoher Schleppdruck aufbaut, der den vor der dichtung herrschenden Arbeitsdruck des Mediums überschreitet und zur Folge hat, daß die niederdruckseitige Dichtkante des Dichtringes von der gegenüberliegenden Anlagefläche abgehoben wird und das in den Raum zwischen den beiden Dicht-kanten eingeschleppte Medium zur Niederdrucksei-te hin aus diesem Raum austreten kann. Der in dem von den beiden Dichtkanten begrenzten Raum herrschende Schleppdruck ist dem Mediumdruck proportional, so daß die Druckdifferenz zwischen Schleppdruck und Mediumdruck proportional zum Mediumdruck ansteigt, wogegen die an der nieder-druckseitigen Dichtkante herrschende Flächenpres-sung den durch den Mediumdruck bestimmten Wert nur um den Betrag überschreitet, der sich aus der Pressung des Spannringes ergibt und im wesentlichen konstant ist, so daß bei zunehmenden Druck die durch das ansteigen des Schleppdruckes bewirkte Entlastung der niederdruckseitigen Dichtkante größer werden kann als die Belastung durch den Spannring mit der Folge der oben erwähnten Leckage. Weiterhin bewirkt eine bei hohem Druck auftretende Verschiebung des Dichtringes in Richtung auf die niederdruckseitige Flanke der Nut eine gewisse Erhöhung der vom Spannring auf die hochdruckseitige Dichtkante ausgeübten Anpreßkraft und eine entsprechende Verminderung der auf die niederdruckseitige Dichtkante ausgeübten Anpreßkraft, was zu einer Erhöhung des Schleppdruckes in dem Raum zwischen den beiden Dichtkanten beiträgt und damit eine Leckage fördert.

Bei der erfindungsgemäßen Anordnung tritt dagegen bei zunehmenden Mediumdruck eine Verlagerung des zwischen den beiden Dichtkanten angeordneten Spannringes in Richtung auf die niederdruckseitige Dichtkante ein, so daß mit zunehmendem Mediumdruck die von dem Spannring ausgeübte Spannkraft in zunehmendem Maße zur niederdruckseitigen Dichtkante hin verlagert wird und demgemäß die Wirkung des Spannringes auf diese Dichtkante bei steigendem Mediumdruck ebenfalls zunimmt, wogegen gleichzeitig die hochdruckseitige Dichtkante entlastet wird, so daß der durch die Anpreßkraft der hochdruckseitigen Dichtkante bestimmte Schleppdruck in dem Raum zwischen den beiden Dichtkanten nicht proportional zum Mediumdruck ansteigt. Dabei ist von besonderem Vorteil, daß die Erfindung die Möglichkeit bietet, durch entsprechende Gestaltung der den Spannring aufnehmenden Aussparung die vom Mediendruck abhängige Zunahme bzw. Abnahme der auf die niederdruckseitige und hochdruckseitige Dichtkante ausgeübten Anpreßkraft des Spannringes an bestimmte Anwendungszwecke optimal anzupassen. In jedem Fall macht es die Erfindung möglich, die Dichtungsanordnung so zu gestalten, daß bei allen im Betrieb zu erwartenden Drücken des abzusperrenden Mediums die auf die niederdruckseitige Dichtkante wirkende Anpreßkraft größer ist als die durch das in den Raum zwischen den beiden Dichtkanten eingeschleppte Medium ausgeübte Gegenkraft, so daß mit einer einzigen, nach der Erfindung ausgebildeten Anordnung eine Abdichtung zwischen zwei geradlinig gegeneinander beweglichen Maschinenteile möglich ist, wie sie bisher mit vergleichbaren Anordnungen nicht erreichbar war.

Bei einer bevorzugten Ausführungsform der Erfindung weist die Aussparung einen im wesentlichen trapezförmigen Querschnitt auf. In einer solchen Nut ist die Ruhelage des Spannringes mit hoher Genauigkeit bestimmt und es läßt sich durch den Anstiegswinkel der Nutflanken die Zunahme der Flächenpressung an der niederdruckseitigen Dichtkante ebenso wie die Entlastung an der hochdruckseitigen Dichtkante bestimmen. Dabei kann es durchaus zweckmäßig sein, die Anstiegswinkel der beiden Nutflanken unterschiedlich zu wählen.

Bei einer bevorzugten Ausführungsform der Erfindung ist der von den beiden Dichtkanten begrenzte Raum mit dem Grund der Aussparung durch mindestens eine Radialbohrung verbunden. Vorzugsweise sind mehrere Radialbohrungen vorgesehen, die am Grund der als Ringnut ausgebildeten Aussparung münden. Diese Radialbohrungen werden zwar stets von dem Spannring abgedeckt und damit verschlossen, jedoch kann das unter einem überhöhten Schleppdruck stehende Medium den Raum zwischen den beiden Dichtkanten über diese Radialbohrungen verlassen, wenn der Schleppdruck den von dem Spannring auf das Ende der Bohrung ausgeübten Gegendruck überschreitet. Dabei ist die den Mediumdruck übersteigende, von dem Spannring ausgeübte Abdeckkraft um so geringer, je höher der Druck des abzusperrenden Mediums ist, weil die vorstehend beschriebene Verschiebung des Spannringes bei zunehmendem Mediumdruck zur Folge hat, daß der Anpreßdruck des Spannringes an der niederdruckseitigen Flanke der Ringnut erhöht und an der hochdruckseitigen Flanke der Ringnut vermindert wird, so daß dann, wenn der Druck des Mediums in dem von den Dichtkanten begrenzten Raum einen bestimmten Betrag überschreitet, der Spannring an der Hochdruckseite von der Flanke der Nut abgehoben wird und das unter überhöhtem Druck stehende Medium zur Hochdruckseite hin entweichen kann, also keine Leckage auftritt. Dabei wird der Überdruck, der in dem Raum zwischen den beiden Dichtkanten herrschen muß, um einen Rückfluß des Mediums über die Radialbohrungen zur Hochdruckseite zu ermöglichen, verhältnismäßig um so geringer, je höher der Druck des Mediums wird.

Ein besonderer Vorteil der erfindungsgemäßen Dichtungsanordnung besteht darin, daß sie gegen relativ große Toleranzen umempfindlich ist, weil wegen der Verformung, welche der Spannring bei seiner Einspannung zwischen dem Dichtring und dem Grund der Nut im ersten Maschinenteil infolge des Querschnittes der Ringnut erfährt, als Spannringe O-Ringe mit relativ großer Schnurdicke verwendet werden können, die eine relativ starke Verformung zulassen und daher auch gegen unterschiedliche Verformungen zur Aufnahme von Toleranzen unempfindlich sind.

Während einerseits ein einfacher O-Ring als Spannring ausreicht, kann der Dichtring zur optimalen Anpassung an den jeweiligen Anwendungszweck sehr unterschiedliche Querschnitte aufweisen. Insbesondere besteht die Möglichkeit, für den Dichtring ein unsymmetrisches Profil zu wählen, wie es beispielsweise zum Einsatz der Dichtungsanordnung als Abstreifer besonders geeignet ist. Bei einer solchen bevorzugten Ausführungsform der Erfindung weist der Dichtring am hochdruckseitigen Ende eine von der Schnittlinie zwischen zwei einander entgegengesetzten Kegelflächen gebildete Dichtkante auf, während am niederdruckseitigen Ende ein eine Dichtkante bildender ringförmiger Steg angeordnet ist. In diesem Falle bildet die Schnittlinie zwischen den beiden Kegelflächen eine sehr scharfe, hochdruckseitige Dichtkante, die eine sehr gute Abdichtung gegen ein unter hohem Druck stehendes Medium, insbesondere gegen eine Hydraulik-Flüssigkeit, bildet, wogegen der ringförmige Steg wegen seiner größeren axialen Ausdehnung als niederdruckseitiger Abstreifer zum Entfernen von Schmutzteilen von der Anlagefläche des zweiten Maschinenteiles dienen kann. Dabei bildet auch der ringsförmige Steg eine Dichtkante zur Abdichtung des Hochdruck-Mediums, deren Wirkung dann besonders gut ist, wenn die Umfangsfläche des Steges mit der Anlagefläche des zweiten Maschinenteiles einen sich zu Niederdruckseite hin öffnenden Winkel bildet. Allerdings kann ein solcher Winkel auch schon dadurch entstehen, daß der Dichtring im Bereich zwischen seinen beiden Dichtkanten durch den Druck des Spannringes durchgebogen wird, so daß sich die außerhalb der Dichtkanten liegenden Abschnitte des Dichtringes von der Anlagefläche des zweiten Maschinenteiles abheben.

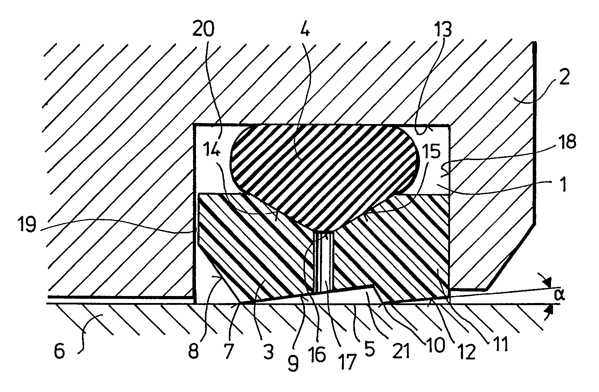

Weitere Einzelheiten und Ausgestaltungen der Erfindung ergeben sich aus der folgenden Beschreibung des in der Zeichnung im Querschnitt dargestellten Ausführungsbeispieles einer Dichtungsanordnung. Die der Beschreibung und der Zeichnung zu entnehmenden Merkmale können bei anderen Ausführungsformen der Erfindung einzeln für sich oder zu mehreren in beliebiger Kombination Anwendung finden.

Bei der in der Zeichnung dargestellten Dichtungsanordnung befinden sich in der Nut 1 eines ersten Maschinenteiles 2 ein Dichtring 3 und ein Spannring 4. Der Dichtring 3 liegt mit seiner dem Grund der Nut 1 abgewandten ersten Umfangsfläche an der Anlagefläche 5 eines zweiten Maschinenteiles 6 an. Bei dem ersten Maschinenteil 2 kann es sich beispielsweise um die Endwand eines Zylinders und bei dem zweiten Maschinenteil 6 um eine Stange handeln, welche eine Bohrung in der Zylinderwand 2 durchsetzt und in Bezug auf die Zylinderwand eine geradlinige Axialbewegung ausführt.

Der in der Nut 1 des ersten Maschinenteiles 2 angeordnete Dichtring 3 besteht aus einem zähelastischen Kunststoff, beispielsweise auf der Basis von Polytetrafluorethylen oder Polyurethan. Seine axiale Länge ist im wesentlichen gleich der Breite der Nut 1, so daß er mit geringem axialem Spiel von dieser Nut aufgenommen wird. An seiner der Anlagefläche 5 des zweiten Maschinenteiles 6 zugewandten Umfangsfläche weist er eine erste Dichtkante 7 auf, die von zwei einander entgegengesetzten Kegelflächen 8, 9 gebildet wird, sowie im Abstand davon eine zweite Dichtkante 10, die von dem Rand eines am anderen Ende des Dichtringes 4 angeordneten ringförmigen Steges 11 gebildet wird. Die Umfangsfläche 12 dieses Steges bildet mit der Anlagefläche 5 des zweiten Maschinenteiles 6 einen kleinen Winkel $\alpha$, der vorzugsweise etwa 5° beträgt.

An der dem Grund 13 der Nut 1 zugewandten zweiten Umfangsfläche weist der Dichtring 3 eine trapezförmige Ringnut auf, die durch schräge Flanken 14, 15 begrenzt ist und in deren Grund 16 wenigstens eine und vorzugsweise mehrere gleichmäßig auf den Umfang des Dichtringes 3 verteilte Radialbohrungen 17 münden, die den zwischen den Dichtkanten 7, 10 des Dichtringes liegenden Raum 21 mit dem Grund 16 der durch die Flanken 14, 15 begrenzten Ringnut verbinden. Der aus einem gummielastischen Material bestehende Spannring 4 ist in die Ringnut eingelegt und wird dadurch in seiner axialen Lage gegenüber dem Dichtring 3 fixiert. Zugleich schließt der Spannring 4 die Radialbohrungen 17 an ihren im Nutengrund 16 mündenden Enden ab. Bei dem Spannring 4 handelt es sich um einen einfachen O-Ring, dessen Schnurdurchmesser im entspannten Zustand größer ist als der Abstand zwischen dem Grund 16 der Ringnut und dem Nutengrund 13, so daß der O-Ring die in der Zeichnung dargestellte Deformation erleidet.

Bei der in der Zeichnung dargestellten Ausführungsform handelt es sich um eine Dichtungsanordnung, die eine Hochdruckabdichtung mit einem Schmutzabstreifer kombiniert. Die Hochdruckabdichtung wird von der Dichtkante 7 zwischen den beiden Kegelflächen 8, 9 gebildet, während der Schmutzabstreifer von dem Steg 11 gebildet wird, dessen Breite so gewählt ist, daß er auch stärker anhaftende Schmutzteilchen von dem sich in Axialrichtung bewegenden zweiten Bauteil, also insbesondere von einer Stange, abstreifen kann. Dabei hat die Dichtkante 10 an dem Steg 11 eine zusätzliche Dichtfunktion.

Es ist ohne weiteres ersichtlich, daß von dem zwischen den beiden Dichtkanten 7 und 10 angeordneten Spannring 4 beide Kanten gleichmäßig belastet werden und dabei auch eine gewisse Durchbiegung des Dichtringes im Bereich zwischen diesen beiden Dichtkanten stattfinden kann, wodurch auch der Winkel $\alpha$ zwischen der Anlagefläche 5 der zweiten Bauteiles 6 und der Umfangsfläche 12 des Steges 11 beeinflußt wird. Ebenso ist erkennbar, daß der von einem O-Ring gebildete Spannring 4 bei seiner Deformation in Axialrichtung symmetrisch zu den Flanken 14, 15 der Ringnut ausweichen und auf diese Weise erhebliche Toleranzen bezüglich der Ringdurchmesser, des Durchmessers der Nut 1 im ersten Bauteil 2 und auch des Querschnittes des O-Ringes aufnehmen kann.

Die dargestellte Dichtungsanordnung wird stets von der Seite, an der sich die von den Kegelflächen gebildete Dichtkante 7 befindet, mit dem abzusperrenden Druckmedium beaufschlagt. Das Druckmedium drückt daher den Dichtring 3 an die niederdruckseitige Flanke 18 der Nut 1, so daß an der hochdruckseitigen Stirnfläche des Dichtringes 3 ein Spalt 19 entsteht, durch den das Druckmedium in den Abschnitt 20 der Nut 1 eindringen kann, der sich an der Hochdruckseite des Spannringes 4 befindet. Dadurch wird auf den Spannring 4 eine Axialkraft ausgeübt, die den Spannring 4 leicht in Richtung zur Niederdruckseite verschiebt, wodurch sich die Pressung, mit welcher Spannring an der niederdruckseitigen Flanke 15 der Ringnut im Dichtring 3 anliegt, vergrößert und dementsprechend die Pressung an der gegenüberliegenden Flanke 14 vermindert wird. Wenn demnach infolge von Hubbewegungen des zweiten Maschinenteiles 6 das unter hohem Druck stehende Medium an der Dichtkante 7 vorbei in den Raum 21 gelangt, der sich zwischen dem Dichtring 3 und dem zweiten Maschinenteil 6 befindet und von den Dichtkanten 7, 10 begrenzt wird, und der sich in diesem Raum infolge dynamischer Vorgänge aufbauende Schleppdruck den Druck auf der Hochdruckseite der Dichtungsanordnung überschreitet, so wird dieser Druck dadurch begrenzt, daß das Medium aus dem Raum 21 durch die Radialbohrung 17 hindurch unter Abheben des Spannringes von der Flanke 14 der trapezförmigen Nut des Dichtringes 3 in den Abschnitt 20 der Nut 1 und damit zur Hochdruckseite der Dichtungsanordnung entweichen kann. Wegen der einseitigen Beaufschlagung des Spannringes 4 und dem dadurch erzeugten, höheren Anpreßdruck an der niederdruckseitigen Flanke 15 ist gewährleistet, daß keinerlei Flüssigkeit zur Niederdruckseite hin entweichen kann, sondern das Öffnen des von dem Spannring in Verbindung mit der Nut im Dichtring gebildeten Rückschlagventils stets zur Hochdruckseite hin erfolgt.

Es sei noch erwähnt, daß bei der erfindungsgemäßen Dichtungsanordnung zum Abdichten das Einschleppen des Druckmediums in den von den Dichtkanten begrenzten Raum 21 und der in diesem Raum stattfindende Druckaufbau zum Ergebnis hat, daß eine Ent lastung der Dichtkanten 7 und 10 stattfindet, die auch dann erhalten bleibt, wenn keine Druckdifferenz zwischen den beiden von der Dichtungsanordnung getrennten Seiten mehr besteht, weil der durch den Spannring 4 abgeschlossene Druckraum nur dann geöffnet wird, wenn der Druck innerhalb des genannten Raumes 21 den Mediendruck um ein durch die Anpreßkraft des Spannringes 4 bestimmtes Maß überschreitet. Weiterhin wäre die als Ausführungsbeispiel dargestellte Dichtung auch dann wirksam, wenn sie keine Radialbohrungen 17 aufweisen würde, weil die vorstehend beschriebene Entlastung der Dichtkanten wegen der beschriebenen Verschiebung des Spannringes an der hochdruckseitigen Dichtkante sehr viel stärker ist als an der niederdruckseitigen Dichtkante, so daß wegen des geringeren Anpreßdrukkes an der hochdruckseitigen Dichtkante das in dem raum 21 unter hohem Schleppdruck stehende Medium zuerst die hochdruckseitige Dichtkante 7 anheben und daher zur Hochdruckseite zurückfließen wird, bevor ein Abheben der niederdruckseitigen Dichtkante 10 stattfinden und damit eine Lekkage eintreten kann.

## Ansprüche

1. Anordnung zum Abdichten des Spaltes zwischen zwei zueinander konzentrischen, geradlinig gegeneinander beweglichen Maschinenteilen, von denen das erste eine Nut und das zweite eine der Nut gegenüberliegende glatte Anlagefläche aufweist, mit einem in die Nut des ersten Maschinenteiles eingelegten Dichtring aus zähelastischem Kunststoff, der an seiner der Anlagefläche zugewandten ersten Umfangsfläche nahe seinen Enden angeordnete Dichtkanten aufweist, mit denen er an der Anlagefläche des zweiten Maschinenteiles anliegt, und der an seiner dem Nutengrund zugewandten zweiten Umfangsfläche eine ringförmige Aussparung aufweist, und mit einem zwischen Dichtring und Nutengrund angeordneten, der Dichtring radial belastenden Spannring aus gummielastischem Material, dessen axiale Ausdehnung geringer ist als diejenige des Dichtringes und der in die Aussparung an der zweiten Umfangsfläche des Dichtringes eingelegt ist,
dadurch gekennzeichnet,
daß sich die Aussparung im Bereich zwischen den beiden Dichtkanten (7, 10) befindet und eine mit zunehmender Tiefe abnehmende Breite aufweist und daß der in die Aussparung eingreifende Spannring frei ist, sich in Richtung auf die Niederdruckseite der Anordnung zu verlagern.

2. Anordnung nach Anspruch 1, dadurch gekennzeichnet, daß die Aussparung einen im wesentlichen trapezförmigen Querschnitt aufweist.

3. Anordnung nach Anspruch 1 oder 2, dadurch gekennzeichnet, daß der von den beiden Dichtkanten (7, 10) begrenzte Raum 21 mit dem Grund der Aussparung durch mindestens eine Radialbohrung (17) verbunden ist.

4. Anordnung nach einem der vorhergehenden Ansprüche, dadurch gekennzeichnet, daß der Dichtring (3) am hochdruckseitigen Ende eine von der Schnittlinie zwischen zwei einander entgegengesetzten Kegelflächen (8, 9) gebildete Dichtkante (7) und am niederdruckseitigen Ende einen eine Dichtkante (10) bildenden ringförmigen Steg (11) aufweist.

5. Anordnung nach Anspruch 4, dadurch gekennzeichnet, daß die Umfangsfläche (12) des Steges (11) mit der Anlagefläche (5) des zweiten Maschinenteiles (6) einen sich in Richtung auf die benachbarte Stirnfläche des Dichtringes (3) öffnenden, kleinen Winkel ($\alpha$) bildet.

Europäisches Patentamt

EUROPÄISCHER RECHERCHENBERICHT

Nummer der Anmeldung

EP 88 11 8695

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 606 886 (MÜLLER) <br> * Figur 2; Spalte 8, Zeile 52 - Spalte 9, Zeile 4 * <br> --- | 1-5 | F 16 J 15/32 <br> F 16 J 15/56 <br> F 16 J 15/16 |
| A | DE-A-3 207 327 (MÜLLER) <br> * Figuren 2-3; Zusammenfassung * <br> --- | 1,3 | |
| A,D | DE-A-3 603 669 (BUSAK & LUYKEN) <br> * Figuren; Zusammenfassung * <br> ----- | 1-2,4 | |

| | |
|---|---|
| | **RECHERCHIERTE SACHGEBIETE (Int. Cl.4)** |
| | F 16 J |

Der vorliegende Recherchenbericht wurde für alle Patentansprüche erstellt

| Recherchenort | Abschlußdatum der Recherche | Prüfer |
|---|---|---|
| DEN HAAG | 19-01-1989 | NARMINIO A. |